# EUROPÄISCHE PATENTSCHRIFT

(11) **EP 1 888 299 B1**
(45) Veröffentlichungstag und Bekanntmachung des Hinweises auf die Patenterteilung: **08.06.2011**
(21) Anmeldenummer: 06763431.1
(22) Anmeldetag: 31.05.2006
(51) Int. Cl.: B23Q 17/09

(54) **VERFAHREN UND VORRICHTUNG ZUR IN-PROZESS WERKZEUGBRUCHERKENNUNG**
METHOD AND DEVICE FOR IN-PROCESS TOOL BREAKAGE DETECTION
PROCEDE ET DISPOSITIF DE DETECTION DE RUPTURE D'OUTIL EN COURS DE PROCESSUS

(30) Priorität: 01.06.2005 DE 102005025547
(43) Veröffentlichungstag der Anmeldung: 20.02.2008
(73) Patentinhaber: Kluft, Werner, D-52078 Aachen (DE)
(72) Erfinder: Kluft, Werner, D-52078 Aachen (DE)
(74) Vertreter: von Kreisler Selting Werner
(86) Internationale Anmeldenummer: PCT/EP2006/062803
(87) Internationale Veröffentlichungsnummer: WO 2006/128892

(56) Entgegenhaltungen:
- EP-A- 1 168 578
- DE-A- 19 837 624
- GB-A- 1 380 008
- US-A- 4 246 577
- US-A- 4 396 322
- US-A- 4 694 686
- US-A1- 2003 163 286
- US-B1- 6 481 939

## Beschreibung

Die Erfindung betrifft ein Verfahren und eine Werkzeugmaschine mit einer Vorrichtung zur in-Prozess Werkzeugbrucherkennung insbesondere bei sehr kleinen Werkzeugen nach dem Oberbegriff der Ansprüche 1 und 5.

Gemäß dem Stand der Technik ist eine Vielzahl an in-Prozess Überwachungssystemen im Markt verfügbar, welche auf Basis von Sensoren die Belastung eines Werkzeuges während der Bearbeitung überprüfen und bei Abweichungen in den Messsignalverläufen gegenüber vergleichbaren Bearbeitungszyklen mit ungebrochenen Werkzeugen je nach Veränderung des Signalverlaufes im vergleichbaren Bearbeitungszyklus auf ein gebrochenes, abgebrochenes, fehlendes oder verschlissenes Werkzeug mit entsprechenden Meldungen zur Werkzeugmaschinensteuerung reagieren und die Werkzeugmaschine stillsetzen. Zur Messung der Belastung der Werkzeuge durch den Zerspanungsvorgang kommen Sensoren wie piezoelektrische Kraftsensoren, Kraft- bzw. Dehnungssensoren auf DMS-Basis, Sensoren zur Messung der Leistung oder der Ströme der Haupt- und Vorschubmotoren, Sensoren zur Messung von Vibrationen sowie Sensoren zur Messung von Körperschall oder Schallemission zum Einsatz.

Je nach Bearbeitungsverfahren wie Drehen, Bohren, Fräsen, Gewinden, Reiben, Schleifen usw. bzw. der ausgewählten Sensorik zur Belastungsmessung sind Zerspanungsquerschnitte bzw. Bohrerdurchmesserwerte bekannt, jenseits derer eine Überwachung nicht mehr möglich ist, weil das Messsignal des gewählten Sensors keine genügende Auflösung zur Erkennung von Werkzeugbruch mehr aufweist oder entsprechend gestört ist. Dies ist gemäß dem heutigen Stand der Technik, insbesondere bei sehr kleinen Zerspanungsquerschnitten oder Bohrwerkzeugdurchmessern der Fall. So ist z. B. bekannt, dass beim Einsatz von Wirkleistungs- oder Stromsensoren an den Haupt- oder Vorschubantrieben der spanabhebenden Werkzeugmaschinen bei der Metallbearbeitung bei Bohrerdurchmessern von weniger als 2 mm bzw. bei Durchmessern von Gewindewerkzeugen von weniger als M5 eine Werkzeugbrucherkennung aus dem Signalverlauf der zuvor genannter Sensoren zur Erfassung der Werkzeugbelastung nicht mehr möglich ist.

Dies liegt daran, dass die verwendeten Sensoren hinsichtlich ihrer Messsignalauflösung nicht weiter verbessert werden können oder dass die Maschine im Bereich des Leerlaufs, also einer Bearbeitung ohne Werkzeug oder Werkstück, Messsignale liefert, die von denjenigen einer Bearbeitung mit Werkzeug und Werkstück nicht zu unterscheiden sind. Ein derartiges System mit entsprechenden Belastungssensoren namens Modulares Prozess Monitor System, PROMOS, ist dem Prospekt (PDA.235.097.GE) der PROMETEC GmbH in Aachen zu entnehmen.

Die GB 1 380 008 betrifft ein Gerät zur Überwachung eines Werkzeuges hinsichtlich des Verschleißes und insbesondere hinsichtlich des vorzeitigen Verschleißes.

Ein Werkzeugbruch innerhalb des Werkstücks kann mit der beschriebenen Vorrichtung nicht detektiert werden.

Auch die US 4,694,686 zielt nicht direkt auf die Detektion des Werkzeugbruches ab, sondern den Werkzeugverschleiß lange bevor das Werkzeug durch Abstumpfen oder Brechen versagt, festzustellen.

Ein anderes Verfahren zur Bruchkontrolle, welches Bohr-, Gewindeschneid- und Reibwerkzeuge mit praktisch beliebig kleinen Durchmessern überprüfen kann, besteht aus einem Laserstrahl, welcher insbesondere die Werkzeugspitze bzw. das Werkzeugende auf sein Vorhandensein abtastet. Näheres hierzu geht aus dem Prospekt "Lasersystem zur Werkzeugeinstellung und Bruchkontrolle" der BLUM-NOVOTEST GmbH in Ravensburg hervor. Dieses taktil messende Laserstrahlsystem besteht aus einer Vorrichtung, welche im Arbeitsraum der Werkzeugmaschine untergebracht wird und über einen Laserstrahl- Sender und Empfänger verfügt. Der Laserstrahl verläuft freilaufend durch den Bearbeitungsraum der Werkzeugmaschine. Das Werkzeug wird durch eine Ergänzung in dem NC-Programm der Werkzeugmaschine mit seiner Spitze bzw. seinem Ende in den Laserstrahl gefahren und überprüft. Führt die Werkzeugspitze bzw. das Werkzeugende zur Unterbrechung des Laserstrahls, so ist diese noch vorhanden und damit das Werkzeug in Ordnung, also nicht gebrochen. Anderenfalls wird von dem Lasersystem eine Mitteilung an die Werkzeugmaschine zum Austausch des gebrochenen Werkzeuges gesendet. Dieser Prüfvorgang kann nicht in-Prozess, also während der Bearbeitung erfolgen, sondern muss vor bzw. nach der Bearbeitung mit jedem Werkzeug oder sogar vor bzw. nach einem jeden Bearbeitungszyklus vorgenommen werden.

Gegenüber dem zuvor genannten in-Prozess Überwachungssystem auf Basis von Belastungssensoren hat dieses Laserstrahlüberwachungssystem zwar den bedeutenden Vorteil kleinste Werkzeuge, theoretisch bis zu annähernd 0 mm Durchmesser, auf Werkzeugbruch zu überwachen, jedoch hat es auf der anderen Seite den erheblichen Nachteil, dass dieser Prüfvorgang nicht prozessbegleitend stattfinden kann. So werden für jeden Prüfvorgang eines Werkzeuges mittels des Laserstrahles etwa 2 bis 3 Sekunden an Zeit für den Messvorgang selbst, einschließlich der Zeiten zum Verfahren des Werkzeuges zum Laserstrahl und zurück benötigt. Dieser Zeitverlust je Werkzeugüberprüfung addiert sich schnell zu einigen Minuten Zeitverlust je Werkstück-Komplettbearbeitung, woraus sich letztlich erhebliche Betriebszusatzkosten ergeben.

Der Erfindung liegt die Aufgabe zugrunde, ein Verfahren bzw. eine Vorrichtung zu schaffen, welche die Nachteile der beiden oben genannten Verfahren nicht aufweist.

Zur Lösung dieser Aufgabe dienen die Merkmale der Ansprüche 1 und 5.

Die Werkzeugbrucherkennung erfolgt durch Überwachung mindestens einer von dem Kontaktzustand zwischen dem Werkzeug und dem Werkstück abhängigen elektrischen Messgröße wie dem elektrischen Widerstand, der elektrischen Leitfähigkeit, der elektrischen Induktivität, der elektrischen Kapazität oder der elektrische Impedanz. Zur Erfassung dieser Messgröße wird ein Messsignalkreislauf durch Einbau eines elektrischen Isolators zwischen zwei Maschinenkomponenten in die Werkzeugmaschine geschaffen und jenseits der beiden Komponenten Werkzeug und Werkstück jeweils an einer Maschinenkomponente in Richtung des elektrischen Isolators eine elektrische Messsignalleitung angebracht, um die Messung der zwischen dem Werkzeug und dem Werkstück erfassbaren elektrischen Messgröße in der Werkzeugmaschine zu ermöglichen.

Bei einem Verfahren und einer Vorrichtung zur Brucherkennung von Werkzeugen von Werkzeugmaschinen, die Werkstücke mit guter elektrischer Leitfähigkeit wie Metalle spanabhebend bearbeiten, ist vorgesehen, dass mindestens eine von dem Kontaktzustand zwischen dem Werkzeug und dem Werkstück abhängige und erfassbare elektrische Messgröße wie der elektrische Widerstand, die elektrische Leitfähigkeit, die elektrische Induktivität, die elektrische Kapazität oder die elektrische Impedanz zu Beginn, während und zum Ende eines Bearbeitungszyklus bzw. Bearbeitungsabschnittes gemessen wird und dass die Signalverläufe dieser elektrischen Messgröße über der Zeit bei identischen Bearbeitungszyklen bzw. Bearbeitungsabschnitten innerhalb eines Werkstücks oder von Werkstück zu Werkstück, zu Beginn, während und zum Ende des Bearbeitungszyklus bzw. Bearbeitungsabschnittes mit festlegbaren Schwellwerten in einem Mess- und Überwachungssystem verglichen werden, um bei weitgehend unveränderlichen Signalverläufen den einwandfreien Zustand eines ungebrochenen Werkzeuges zu detektieren und bei Abweichungen vom normalen Signalverlauf außerhalb der festlegbaren Schwellwertgrenzen bzw. bei Verletzung der Schwellwertgrenzen durch den Signalverlauf auf ein gebrochenes, abgebrochenes oder fehlendes Werkzeug zu schließen und über eine elektrische Maschinenschnittstelle die Maschinensteuerung der Werkzeugmaschine dazu zu veranlassen, den Bearbeitungsvorgang zu unterbrechen bzw. zu stoppen.

Es ist vorgesehen, dass zur Messung der zwischen dem Werkzeug und dem Werkstück erfassbaren elektrischen Messgröße in der Werkzeugmaschine ein elektrischer Isolator zwischen zwei Maschinenkom ponenten in dem Komponentenzusammenhang "Maschinenbett, Vorschubschlitten A, Werkzeugrevolver bzw. -Spindel, Werkzeugaufnahme, Werkzeug, Werkstück, Werkstückspannvorrichtung bzw. -Aufnahme, Vorschubschlitten B und wiederum Maschinenbett" eingebaut wird und dass jenseits der beiden Komponenten Werkzeug und Werkstück jeweils an einer Maschinenkomponente in Richtung des elektrischen Isolators eine elektrische Messsignalleitung über Kontaktelemente angebracht ist, um die Messung der zwischen dem Werkzeug und dem Werkstück erfassbaren elektrischen Messgröße in der Werkzeugmaschine über ein Mess- und Überwachungssystem, ggf. mit Anzeigemöglichkeit für die elektrische Messgröße zu ermöglichen.

Der elektrische Isolator besteht aus einem elektrisch isolierenden Material und gleichzeitig mechanisch hochfestem Material, so dass die mechanische Steifigkeit und das mechanische Dämpfungsverhalten der Werkzeugmaschine nur unbedeutend davon beeinflusst wird und dass deshalb dafür vorzugsweise hochfeste Kunststoffe oder Keramikmaterialien zum Einsatz kommen.

Die als elektrischer Isolator bei Werkzeugmaschinenspindeln verwendeten Hybridlager in der Werkzeugmaschinenspindel tragen die Spindelwelle und bestehen aus Lagerinnen- und Außenringen aus Stahl und Kugeln aus elektrisch isolierender Keramik, die den elektrischen Isolator bilden. Es wird ein Kontaktelement zur Kontaktierung der elektrischen Messsignalleitung benutzt, der die elektrische Messgröße von der drehenden Welle der Spindel abgreifen kann. Das Kontaktelement ist also z. B. ein elektrischer Drehübertrager oder ein Schleifkontakt, z.B. eine Metall - oder Kohlefaserbürste.

Die Hybridlager und auch ein eventuell vorhandenes pressluftbasiertes oder das kühlschmiermittelbasiertes Abdichtungslabyrinth bilden jeweils eine Impedanz in elektrischer Parallelschaltung und das Kontaktelement auf der Welle in Form eines Drehgebers eine Impedanz in elektrischer Reihenschaltung zur Impedanz des Kontaktzustandes zwischen dem Werkzeug und dem Werkstück. Die vom Kontaktzustand abhängige und erfassbare elektrische Messgröße 14 ist somit auch von diesen parallelen und in Reihe befindlichen Impedanzen abhängig. Diese Abhängigkeit spielt allerdings bei dem Vergleich der Signalverläufe der elektrischen Messgröße in dem Mess- und Überwachungssystem mit Schwellwerten keine negative, das Überwachungsergebnis verschlechternde Rolle spielen, weil der Vergleich der Messsignalkurven mit den festlegbaren Schwellwerten von Anfang an, also auch bei der Festlegung der Schwellwerte bei identischen Bearbeitungszyklen bzw. Bearbeitungsabschnitten erfolgt und somit eine relative, fehlerlose Vergleichsbetrachtung erfolgt.

Die zwischen dem Werkzeug und dem Werkstück erfassbare elektrische Messgröße wird während der Bearbeitung mit einem elektrischen Mess- und Überwachungssystem überwacht, welches die Möglichkeit hat, die Messsignalverläufe je Bearbeitungszyklus bzw. Bearbeitungsabschnitt der Werkzeuge zu speichern bzw. festlegbare Schwellwerte dazu zu bilden und zu speichern, um im Falle von Signalabweichungen in den Messsignalverläufen aufgrund von gebrochenen, abgebrochenen oder fehlenden Werkzeugen eine Mitteilung im Zeitpunkt der Verletzung der Schwellwertgrenzen über diesen Werkzeugzustand an die Maschinensteuerung zu generieren, um die Werkzeugmaschine still zu setzen.

Das Verfahren bzw. die Vorrichtung gemäß der Erfindung verursacht also keinen Zeitverlust wie das taktile laserstrahlbasierte Messverfahren und weist dennoch die Fähigkeit auf, insbesondere bei kleinen Zerspanungsquerschnitten und sehr kleinen Durchmessern von Bohr-, Gewindeschneid- und Reibwerkzeuge, theoretisch bis zu annähernd 0 mm Durchmesser, eine entsprechende Werkzeugbrucherkennung durchzuführen.

Die Erfindung wird im Folgenden unter Bezugnahme auf die Zeichnungen näher erläutert.

Es zeigen:
- Fig. 1: die mechanische und elektrische Anordnung einer erfindungsgemäßen Vorrichtung;
- Fig. 2: den Signalverlauf der elektrischen Messgröße über der Zeit,
- Fig. 3: im Vergleich zu Fig. 2 beispielhaft einen aufgrund von Werkzeugbruch geänderten Signalverlauf der elektrischen Messgröße über der Zeit, und
- Fig. 4: ein Ausführungsbeispiel mit Hybridlagern.

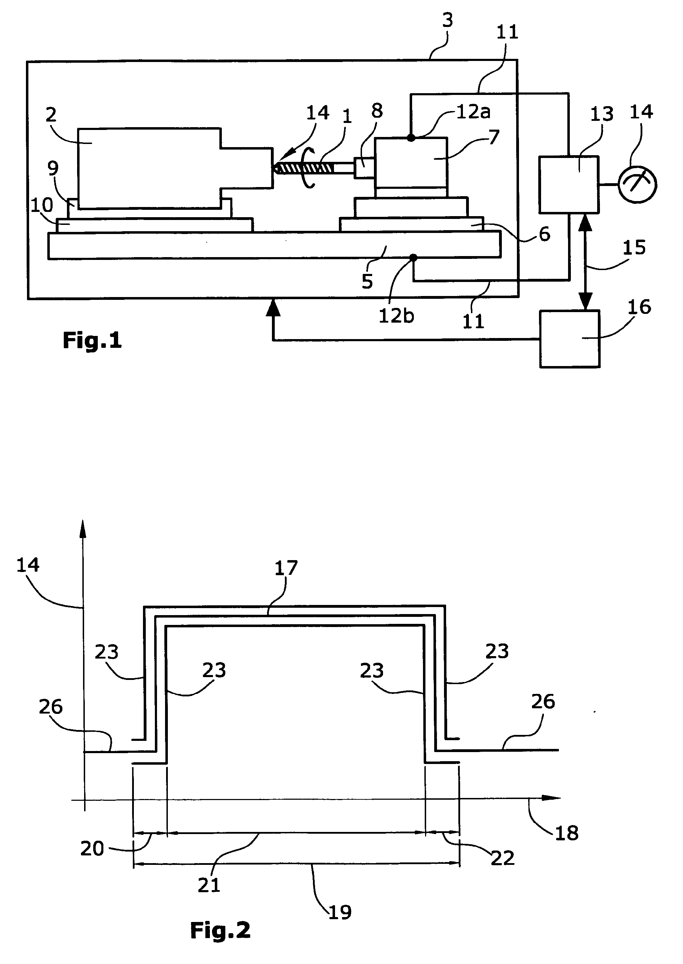

Fig. 1 zeigt die mechanische und elektrische Anordnung einer erfindungsgemäßen Vorrichtung. Die beispielhafte Anordnung der Werkzeugmaschinenkomponenten 5 bis 10 mit dem elektrischen Isolator zwischen den Werkzeugmaschinenkomponenten, dem Vorschubschlitten 6 und der Werkzeugspindel 8, führt zu der Möglichkeit über die beiden Kontaktelemente 12a, 12b und die beiden elektrischen Messsignalleitungen 11 über das Mess- und Überwachungssystem 13 den Kontaktzustand zwischen dem Werkzeug 1 und dem Werkstück 2 als elektrische Messgröße 14 wie dem elektrische Widerstand, der elektrischen Leitfähigkeit, der elektrischen Induktivität, der elektrischen Kapazität oder der elektrischen Impedanz zu erfassen. Das Mess- und Überwachungssystem 13 ermöglicht es, diese elektrische Messgröße 14 zu Beginn, während und zum Ende eines Bearbeitungszyklus bzw. Bearbeitungsabschnittes 19 zu messen und mit Schwellewerten 23 zu vergleichen, um bei Abweichungen vom normalen Signalverlauf 24 außerhalb der festlegbaren Schwellwertgrenzen 23 bzw. bei Verletzung der Schwellwertgrenzen 25 durch den Signalverlauf 17 auf ein gebrochenes, abgebrochenes oder fehlendes Werkzeug zu schließen und über eine elektrische Maschinenschnittstelle 15 die Maschinensteuerung 16 der Werkzeugmaschine 5 dazu zu veranlassen, den Bearbeitungsvorgang zu unterbrechen bzw. zu stoppen.

Fig. 2 zeigt den Signalverlauf 17 der elektrischen Messgröße 14 über der Zeit 18 einschließlich der festlegbaren Schwellwerte 23 und den Bereich des Bearbeitungszyklus bzw. Bearbeitungsabschnitts 19 mit seinen Phasen Beginn 20, während 21 und Ende 22 bei einem einwandfreien Zustand eines ungebrochenen Werkzeuges.

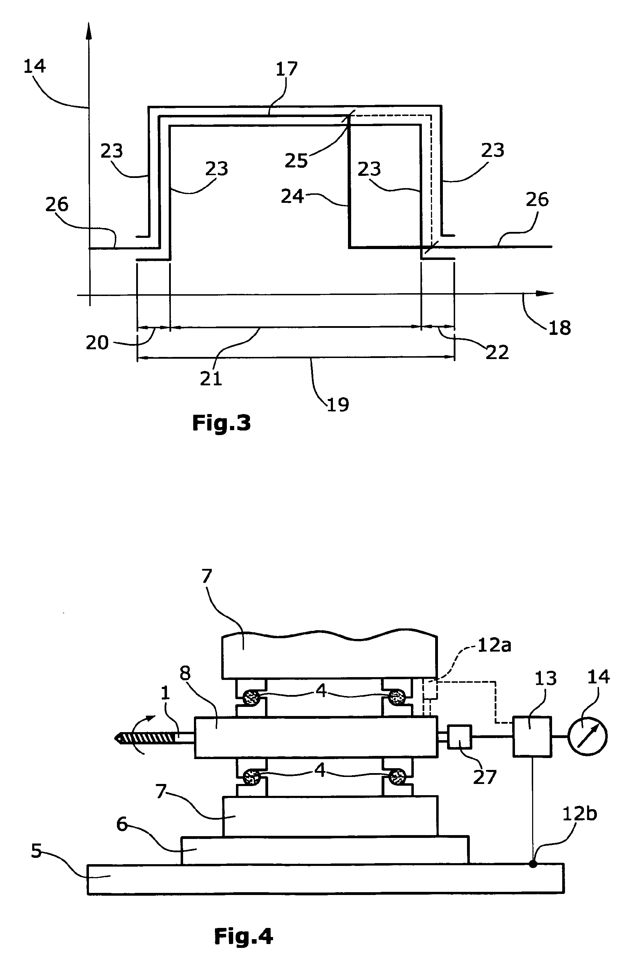

Fig. 3 zeigt im Vergleich zu Fig. 2 beispielhaft einen aufgrund von Werkzeugbruch geänderten Signalverlauf 17 der elektrischen Messgröße 14 über der Zeit 18. Während des Werkzeugbruches (z. B. des Schaftbruch eines Bohrers, der seinen Kontakt mit dem Werkstück völlig verliert) erfolgt eine Verletzung der unteren Schwellwertgrenze 23 zum Zeitpunkt 25 durch den aufgrund von Werkzeugbruch geänderten Signalverlauf 24. Der zur selben Zeit des Signalverlaufes 24 bei Werkzeugbruch normalerweise ohne Werkzeugbruch hätte vorliegende Signalverlauf ist gestrichelt dargestellt. Wie sich zeigt, fällt der Signalverlauf 17 der elektrischen Messgröße 14 bei dem Werkzeugbruch, der in diesem Beispiel ein Schaftbruch war und der dem Fehlen des Werkzeuges gleichzusetzen ist, auf das Signalniveau 26, welches existiert, wenn das Werkzeug keinen Kontakt mit dem Werkstück hat.

Fig. 4 zeigt eine Detailzeichnung der in dem Spindelgehäuse 7 mit Hilfe von Hybridlagern gelagerten Werkzeugspindel 8. Die Hybridlager weisen Keramikkugeln 4 als Isolator auf, so dass die Spindel 8 gegenüber der Werkzeugmaschine 3 isoliert ist.

Die Messgröße 14 wird mit Hilfe von Kontaktelementen 12a, 12b gemessen, wobei das Kontaktelement 12a z.B. aus einer Metall- oder Kohlefaserbürste bestehen kann und der Kontakt 12b am Maschinenbett 5 oder an einem anderen Teil 9, 10 der Werkzeugmaschine 3 oder dem Werkstück 2 kontaktiert.

In Fig. 4 ist das Kontaktelement 12a als Alternative zu einem Drehübertrager 27 dargestellt.

### Bezugszeichenliste

- 1.: Werkzeug
- 2.: Werkstück
- 3.: Werkzeugmaschine
- 4.: elektrischer Isolator
- 5.: Maschinenbett
- 6.: Vorschubschlitten A
- 7.: Spindelgehäuse
- 8.: Werkzeugspindel (auch mit Werkzeugrevolver)
- 9.: Werkstückspannvorrichtung bzw. -Aufnahme
- 10.: Vorschubschlitten B
- 11.: elektrische Messsignalleitung
- 12a.: Kontaktelemente (z.B. Metall- oder Kohlefaserbürste, Drehübertrager etc.)
- 12b.: Kontaktelement zum Maschinenbett
- 13.: Mess- und Überwachungssystem mit Schwellwerten und Maschinenschnittstelle
- 14.: elektrische Maschinenschnittstelle
- 15.: elektrische Messgröße bzgl. des Kontaktzustandes zwischen Werkzeug 1 und Werkstück 2
- 16.: Maschinensteuerung
- 17.: Signalverlauf der elektrischen Messgröße 14
- 18.: Zeit
- 19.: Bearbeitungszyklus bzw. Bearbeitungsabschnitt
- 20.: Beginn des Bearbeitungszyklus bzw. Bearbeitungsabschnitt 19
- 21.: während des Bearbeitungszyklus bzw. Bearbeitungsabschnitt 19
- 22.: Ende des Bearbeitungszyklus bzw. Bearbeitungsabschnitt 19
- 23.: festlegbare Schwellwerte
- 24.: Abweichungen vom normalen Signalverlauf
- 24.: Verletzung der Schwellwertgrenzen (Zeitpunkt)
- 25.: Signalniveau der elektrischen Messgröße 14, bei dem das Werkzeug keinen Kontakt mit dem Werkstück hat,
- 26.: Signalniveau des Signalverlaufs 17 der elektronischen Messgröße 14, welches existiert, wenn das Werkzeug keinen Kontakt mit dem Werkstück hat
- 27.: Drehübertrager

## Patentansprüche

1. Werkzeugmaschine mit einer Vorrichtung zur Brucherkennung von Werkzeugen (1) mit einem Mess- und Überwachungssystem (13) für die Brucherkennung, wobei die Werkzeugmaschine (3) eine Spindelwelle (8) für das Werkzeug (1) aufweist, das Werkstücke (2) mit guter elektrischer Leitfähigkeit spanabhebend bearbeitet, und wobei das Mess- und Überwachungssystem (13) mindestens eine von dem Kontaktzustand zwischen dem Werkzeug (1) und dem Werkstück (2) abhängige elektrische Messgröße (14) zwischen dem Werkzeug (1) und dem Werkstück (2) misst, **dadurch gekennzeichnet,**
**dass** zum Erkennen von Werkzeugbrüchen bei geringen Werkzeugdurchmessern oder geringen Zerspanungsquerschnitten Hybridlager die Spindelwelle (8) tragen und gegenüber der Werkzeugmaschine (3) isolieren, dass die Hybridlager Kugeln aus elektrisch isolierender Keramik aufweisen, die einen elektrischen Isolator bilden und, dass ein Kontaktelement (12a) zum Messen der zwischen dem Werkzeug (1) und dem Werkstück (2) erfassbaren Messgröße (14) die sich drehende Spindelwelle (8) kontaktiert.

2. Werkzeugmaschine nach Anspruch 1, **dadurch gekennzeichnet, dass** sie eine Maschinensteuerung (16) aufweist und dass das Mess- und Überwachungssystem (13) die elektrische Messgröße (14) zu Beginn, während und zum Ende eines Bearbeitungszyklus bzw. Bearbeitungsabschnittes (19) misst und die Signalverläufe (17) dieser elektrischen Messgröße (14) über der Zeit (18) bei identischen Bearbeitungszyklen bzw. Bearbeitungsabschnitten (19) innerhalb eines Werkstücks (2) oder von Werkstück zu Werkstück, zu Beginn (20), während (21) und zum Ende (22) des Bearbeitungszyklus bzw. Bearbeitungsabschnittes (19) mit festlegbaren Schwellwerten (23) vergleicht, um bei weitgehend unveränderlichen Signalverläufien den einwandfreien Zustand eines ungebrochenen Werkzeuges zu detektierten und bei Abweichungen vom normalen Signalverlauf (24) außerhalb der festlegbaren Schwellwertgrenzen (23) bzw. bei Verletzung der Schwellwertgrenzen (25) durch den Signalverlauf (17) auf ein gebrochenes, ausgebrochenes oder fehlendes Werkzeug zu schließen und die Maschinensteuerung (16) der Werkzeugmaschine (3) dazu zu veranlassen, den Bearbeitungsvorgang zu unterbrechen bzw. zu stoppen.

3. Werkzeugmaschine nach einem der Ansprüche 1 oder 2, **dadurch gekennzeichnet, dass** die von dem Kontaktzustand zwischen dem Werkzeug (1) und dem Werkstück (2) abhängige und erfassbare elektrische Messgröße (14) der elektrische Widerstand, die elektrische Leitfähigkeit, die elektrische Induktivität, die elektrische Kapazität oder die elektrische Impedanz ist.

4. Werkzeugmaschine nach einem der Ansprüche 1 bis 3, **dadurch gekennzeichnet, dass** das Kontaktelement (12a) aus einem Drehübertrager (27) besteht.

5. Verfahren zur Brucherkennung von Werkzeugen (1) einer Werkzeugmaschine (3),
- mit einer Spindelwelle (8) für das Werkzeug (1) und
- mit einem Mess- und Überwachungssystem (13) für die Brucherkennung, mit dem mindestens eine von dem Kontaktzustand zwischen dem Werkzeug (1) und dem Werkstück (2) abhängige elektrische Messgröße (14) zwischen dem Werkzeug (1) und dem Werkstück (2) gemessen wird, wobei die elektrische Messgröße (14) über Kontaktelemente (12a, 12b) von der sich drehenden Spindelwelle (8) und von dem Werkstück (2) abgegriffen wird und an das Mess- und Überwachungssystem (13) weitergeleitet wird,
- wobei Werkstücke (2) mit guter elektrischer Leitfähigkeit spanabhebend bearbeitet werden,
**dadurch gekennzeichnet,**
**dass** die Werkzeugmaschine (3) zum Erkennen von Werkzeugbrüchen bei geringen Werkzeugdurchmessern oder geringen Zerspanungsquerschnitten mittels die Spindelwelle (8) tragenden Hybridlagern gegenüber der Spindelwelle (8) isoliert wird, wobei für die Hybridlager Kugeln (4) aus elektrisch isolierender Keramik, die einen elektrischen Isolator bilden, verwendet werden.

6. Verfahren nach Anspruch 5, **dadurch gekennzeichnet, dass** mindestens die von dem Kontaktzustand zwischen dem Werkzeug (1) und dem Werkstück (2) abhängige und erfassbare elektrische Messgröße (14) zu Beginn, während und zum Ende eines Bearbeitungszyklus bzw. Bearbeitungsabschnittes (19) gemessen wird und dass die Signalverläufe (17) dieser elektrischen Messgröße (14) über der Zeit (18) bei identischen Bearbeitungszyklen bzw. Bearbeitungsabschnitten (19) innerhalb eines Werkstücks oder von Werkstück zu Werkstück, zu Beginn (20), während (21) und zum Ende (22) des Bearbeitungszyklus bzw. Bearbeitungsabschnittes (19) mitfestlegbaren Schwellwerten (23) in dem Mess- und Überwachungssystem (13) verglichen werden, um bei weitgehend unveränderlichen Signalverläufen den einwandfreien Zustand eines ungebrochenen Werkzeuges zu detektieren und bei Abweichungen vom normalen Signalverlauf (24) außerhalb der festlegbaren Schwellwertgrenzen (23) bzw. bei Verletzung der Schwellwertgrenzen (25) durch den Signalverlauf (17) auf ein gebrochenes, abgebrochenes oder fehlendes Werkzeug (1) zu schließen und den Bearbeitungsvorgang zu unterbrechen bzw. zu stoppen.

## Claims

1. A machine tool comprising a device for the detection of the breakage of tools (1), including a measuring and monitoring system (13) for breakage detection, the machine tool (3) comprising a spindle shaft (8) for the tool (1) which machines work pieces (2) with good electric conductivity, and wherein said measuring and monitoring system (13) measures at least one electrical measured variable (14) between the tool (1) and the work piece (2), said measured variable depending on the contacting state between the tool (1) and the work piece (2), **characterized in**
**that** for the detection of tool breakages with small tool diameters or small machining cross sections, hybrid bearings support the spindle shaft (8) and insulate the same against the machine tool (3), that the hybrid bearings comprise balls of electrically insulating ceramics which form an electric insulator, and that a contact element (12a) contacts the rotating spindle shaft (8) to measure the measured variable (14) detectable between the tool (1) and the work piece (2).

2. The machine tool of claim 1, **characterized in that** it comprises a machine control (16), and that the measuring and monitoring system (13) measures said electrical measured variable (14) at the beginning, during and at the end of a working cycle or working phase (19) and, for identical working cycles or working phases (19) within a work piece (2) or from one work piece to the next, compares the signal profiles (17) of this electrical measured variable (14) over time (18) to definable threshold values (23), the comparison being made at the beginning (20), during (21) and at the end (22) of the working cycle or working phase (19), in order to detect the perfect condition of an unbroken tool, if the signal profiles are substantially non-varying, and, in case of variations from the normal signal profile (24) outside the definable threshold value limits (23) or in case of an infringement of the threshold value limits (25) by the signal profile (17), to infer on a broken, cracked or absent tool and to cause the machine control (16) of the machine tool (3) to interrupt or stop the working process.

3. The machine tool of one of claims 1 or 2, **characterized in that** the detectable electrical measured variable (14) depending on the contacting state between the tool (1) and the work piece (2) is the electric resistance, the electric conductivity, the electric inductance, the electric capacitance or the electric impedance.

4. The machine tool of one of claims 1 to 3, **characterized in that** the contact element (12a) is a rotary transformer (27).

5. A method for breakage detection of tools (1) of a machine tool (3),
- comprising a spindle shaft (8) for the tool (1), and
- comprising a measuring and monitoring system (13) for the detection of breakages which measures at least one electrical measured variable (14) between the tool (1) and a work piece (2) that depends on the contacting state between the tool (1) and the work piece (2), wherein the electrical measured variable (14) is tapped via contact elements (12a, 12b) from the rotating spindle shaft (8) and the work piece (2) and is transmitted to the measuring and monitoring system (13),
- wherein work pieces (2) with good electric conductivity are machined,
**characterized in**
**that**, for the detection of tool breakages with small tool diameters or small machining cross sections, the machine tool (3) is insulated against the spindle shaft (8) by means of hybrid bearings supporting the spindle shaft (8), the hybrid bearings using balls (4) of electrically insulating ceramics which form an electric insulator.

6. The method of claim 5, **characterized in that** at least said detectable electrical measured variable (14) that depends on the contacting state between the tool (1) and the work piece (2) is measured at the beginning, during and at the end of a working cycle or working phase (19) and that, for identical working cycles or working phases (19) within a work piece (2) or from one work piece to the next, the signal profiles (17) of this electrical measured variable (14) over time (18) are compared in the measuring and monitoring system (13) to definable threshold values (23) at the beginning (20), during (21) and at the end (22) of the working cycle or working phase (19) in order to detect the perfect condition of an unbroken tool, if the signal profiles are substantially non-varying, and, in case of variations from the normal signal profile (24) outside the definable threshold value limits (23) or in case of an infringement of the threshold value limits (25) by the signal profile (17), to infer on a broken, cracked or absent tool (1) and to interrupt or stop the working process.

## Revendications

1. Machine outil comprenant un dispositif de détection de ruptures d'outils (1) avec un système de mesurage et de contrôle (13) pour la détection de ruptures, ladite machine outil (3) comprenant un arbre de broche (8) pour l'outil (1), ledit outil usinant, avec enlèvement de copeaux, des pièces (2) de bonne conductivité électrique, et ledit système de mesurage et de contrôle (13) mesurant au moins un mesurande électrique (14) entre ledit outil (1) et ladite pièce (2), ledit mesurande dépendant de l'état de contact entre ledit outil (1) et ladite pièce (2), **caractérisée en ce**
**que**, pour la détection de ruptures d'outils en cas de faibles diamètres d'outils ou faibles sections d'usinage, des supports hybrides supportent l'arbre de broche (8) et l'isolent contre la machine outil (3), que les supports hybrides comprennent des sphères en céramique isolant électriquement et formant un isolateur électrique, et qu'un élément de contact (12a) contacte l'arbre de broche (8) tournant, afin de mesurer ledit mesurande (14) détectable entre ledit outil (1) et ladite pièce (2).

2. Machine outil selon la revendication 1, **caractérisée en ce qu'**elle comprend une commande de machine (16), et que ledit système de mesurage et de contrôle (13) mesure ledit mesurande (14) électrique au commencement, pendant et à la fin d'un cycle d'usinage ou d'une phase d'usinage (19) et compare, au commencement (20), pendant (21) et à la fin (22) d'un cycle d'usinage ou d'une phase d'usinage (19), les profils de signal (17) de ce mesurande (14) électrique dans le temps, pour cycles d'usinage ou phases d'usinage (19) identiques dans une pièce (2) ou d'une pièce à l'autre, avec des valeurs de seuil (23) définissables, afin de détecter l'état parfait d'un outil sans rupture, si les profils de signal sont pratiquement sans variations, et de conclure, en cas de déviations du profil de signal normal (24) hors des limites de valeur de seuil (23) définissables ou en cas d'une infraction des limites de valeur de seuil (25) par le profil de signal (17), à un outil rompu, cassé ou absent et de faire ladite commande de machine (16) de la machine outil (3) interrompre ou terminer le processus d'usinage.

3. Machine outil selon l'une quelconque des revendications 1 ou 2, **caractérisée en ce que** le mesurande (14) électrique détectable et dépendant de l'état de contact entre ledit outil (1) et ladite pièce (2) est la résistance électrique, la conductivité électrique, l'inductance électrique, la capacitance électrique ou l'impédance électrique.

4. Machine outil selon l'une quelconque des revendications 1 à 3, **caractérisée en ce que** ledit élément de contact (12a) est un transmetteur de rotation (27).

5. Procédé de détection de ruptures d'outils (1) d'une machine outil (3),
- comprenant un arbre de broche (8) pour ledit outil (1), et
- comprenant un système de mesurage et de contrôle (13) pour la détection de ruptures à l'aide duquel est mesuré au moins un mesurande électrique (14) entre ledit outil (1) et ladite pièce (2), dépendant de l'état de contact entre ledit outil (1) et ladite pièce (2), ledit mesurande électrique (14) étant pris dudit arbre de broche (8) tournant et de ladite pièce (2) par l'intermédiaire des éléments de contact (12a, 12b) et est fournit audit système de mesurage et de contrôle (13),
- des pièces (2) de bonne conductivité électrique étant usinées avec enlèvement de copeaux,
**caractérisé en ce**
**que**, pour la détection de ruptures d'outils en cas de faibles diamètres d'outils ou faibles sections d'usinage, ladite machine outil (3) est isolée contre l'arbre de broche (8) par des supports hybrides portant l'arbre de broche (8), lesdits supports hybrides utilisant des sphères (4) en céramique isolant électriquement et formant un isolateur électrique.

6. Procédé selon la revendication 5, **caractérisé en ce qu'**au moins le mesurande (14) électrique détectable et dépendant de l'état de contact entre ledit outil (1) et ladite pièce (2) est mesuré au commencement, pendant et à la fin d'un cycle d'usinage ou d'une phase d'usinage (19) et que, pour cycles d'usinage ou phases d'usinage (19) identiques dans une pièce (2) ou d'une pièce à l'autre, les profils de signal (17) de ce mesurande électrique (14) dans le temps (18) sont comparés, au commencement (20), pendant (21) et à la fin (22) d'un cycle d'usinage ou d'une phase d'usinage (19), avec des valeurs de seuil (23) définissables dans ledit système de mesurage et de contrôle (13), afin de détecter l'état parfait d'un outil sans rupture, si les profils de signal sont pratiquement sans variations, et de conclure, en cas de déviations du profil de signal normal (24) hors des limites de valeur de seuil (23) définissables ou en cas d'une infraction des limites de valeur de seuil (25) par le profil de signal (17), à un outil rompu, cassé ou absent et d'interrompre ou terminer le processus d'usinage.
